# Europäisches Patentamt
## European Patent Office
### Office européen des brevets

(19)

(11) Veröffentlichungsnummer : **0 426 989 B1**

(12)

# EUROPÄISCHE PATENTSCHRIFT

(45) Veröffentlichungstag der Patentschrift :
**02.02.94 Patentblatt 94/05**

(51) Int. Cl.⁵ : **G01N 27/22**

(21) Anmeldenummer : **90118805.2**

(22) Anmeldetag : **01.10.90**

(54) **Selektiver Gassensor.**

(30) Priorität : **04.11.89 DE 3936758**

(43) Veröffentlichungstag der Anmeldung :
**15.05.91 Patentblatt 91/20**

(45) Bekanntmachung des Hinweises auf die
Patenterteilung :
**02.02.94 Patentblatt 94/05**

(84) Benannte Vertragsstaaten :
**DE FR GB**

(56) Entgegenhaltungen :
**EP-A- 0 168 200**
**EP-A- 0 256 444**
**EP-A- 0 257 842**
**DE-A- 2 905 079**
**DE-A- 2 947 050**
**FR-A- 2 203 520**
**US-A- 4 564 882**

(73) Patentinhaber : **DORNIER GMBH**
**Postfach 1420**
**D-88004 Friedrichshafen (DE)**

(72) Erfinder : **Haas, Jürgen, Dr.**
**Sonnhalde**
**W-7758 Meersburg (DE)**
Erfinder : **Plog, Carsten, Dr.**
**Dillenstrasse 13**
**W-7778 Markdorf (DE)**
Erfinder : **Obermeier, Ernst, Prof., Dr.**
**Popitzweg 9**
**W-1000 Berlin 13 (DE)**

(74) Vertreter : **Landsmann, Ralf, Dipl.-Ing.**
**DORNIER GMBH - Patentabteilung - Kleeweg
3**
**D-88048 Friedrichshafen (DE)**

## Beschreibung

Die Erfindung betrifft einen selektiven chemischen Sensor für Gase, bestehend aus einem als Kondensator wirkenden Bauelement und einer im Dielektrikum befindlichen, gasdurchlässigen Schicht.

Für die Automatisierung von Prozessen einerseits und den Wunsch nach möglichst umfassender Messung von Schadstoffemissionen und Schadstoffimissionen andererseits entwickelt sich ein steigender Bedarf an einfachen, kleinen und preiswerten Messfühlern und Meßgeräten. In diesem Zusammenhang entstand eine Gruppe von Meßfühlern, die chemische Größen, wie z.B. die Konzentration eines Stoffes in physikalisch meßbare Größen, wie z.B. Strom oder Spannung umsetzt. Diese Meßfühler werden als chemische Sensoren bezeichnet. In der indirekten Meßmethode liegt aber auch die Problematik geringer Selektivität und/oder hoher Querempfindlichkeit, verglichen mit physikalischen Sensoren, begründet.

Im allgemeinen sind chemische Sensoren aus einer gassensitiven Schicht und einem Bauelement, das als Transducer wirkt aufgebaut. Als sogenannte Transducer können beispielsweise Schwingquarze, Feldeffekttransistoren oder Interdigitalkondensatoren eingesetzt werden. In der Regel sind die Transducer nicht selbst chemisch sensitiv, so daß die Wirkung insgesamt auf der Wechselwirkung einer chemisch sensitiven Schicht mit der umgebenden Gasatmosphäre beruht. Isolierende, gasselektive Beschichtungen werden auf mikrostrukturierte Bauelemente derzeit wie folgt aufgebracht:

Herstellung von organisch modifizierten Silikaten (Ormosile), die als selektiv wirksame Adsorberstrukturen eingesetzt werden. Die Beschichtung besteht aus einem amorphen Gerüst über Siloxanbindungen (Si-O-Si) analog den anorganischen Gerüstsilikaten. Die eigentliche spezifische Adsorption von Gasmolekülen erfolgt über funktionelle organische Gruppen. Der physikalisch-chemische Meßeffekt beruht auf einer Änderung der Dielektrizitätskonstanten durch ein spezifisch absorbiertes Gas. Aufgrund der nur auf der Oberflächenadsorption basierenden Wirkungsweise ist die Empfindlichkeit dieser Ormosilbeschichtung allerdings gering.

Herstellung von monomolekularen Beschichtungen auf mikrostrukturierten Bauelementen unter Anwendung der Langmuir-Blodgett-Technik: Dabei wird ein auf einer Wasseroberfläche erzeugter Film aus langgestreckten Molekülen auf das Mikrostruktur-Bauelement übertragen. Erste Versuche wurden mit Phthalocyaninen unternommen, deren spezifische NO-Adsorption bekannt ist. Durch eine Variation des Zentralatoms im Phthalocyanin-Komplex kann der Sensor auch gegenüber anderen Molekülen empfindlich gemacht werden.

Herstellung dünner Zinnoxidschichten durch Vakuumbedampfen und Kathodenzerstäubung: Bei diesem Konzept werden dünne, polykristalline Zinnoxidschichten auf einen isolierenden Träger aufgebracht und durch eine geeignete Metallisierung kontaktiert. Zum Betrieb werden diese Elemente auf 300 bis 400 °C aufgeheizt, um eine Wechselwirkung zwischen Gas und Schicht zu erreichen. Unter dem Einfluß reduzierender Gase ändern die Schichten ihre Leitfähigkeit als Funktion der Gaskonzentration. Ein großes Problem dabei ist die unzureichende Selektivität und Stabilität der Schichten.

Versuche zum Einsatz von Zeolithen als Filter zur Beschichtung von Feldeffekttransistoren sind durchgeführt worden. Die Wirkung sollte auf der unterschiedlichen Durchlässigkeit der Zeolithe für verschiedene Gase beruhen. Erhebliche Probleme entstanden jedoch durch die Diffusion der Gase durch die sogenannten Sekundärporen an das Gate des Feldeffekttransistors, so daß keine selektive Wirkung erzielt werden konnte.

Der Erfindung liegt die Aufgabe zugrunde, eine sensitive Beschichtung für mikroelektronische Bauteile vorzusehen, deren Selektivität für bestimmte Gase in erster Linie durch die Abmessungen der Primärporen bestimmt wird und gleichzeitig keine störenden Effekte durch die Sekundärporen hervorgerufen werden.

Es wurde nun gefunden, daß das Problem der Gasdiffusion durch Sekundärporen durch den Einsatz chemisch sensitiver Schichten aus Zeolith in Verbindung mit Kondensatorstrukturen in vorteilhafter Weise gelöst werden kann. Hierbei kommt es nicht wie beim Beispiel der Feldeffekttransistoren auf eine vorgeschaltete Filterwirkung der Zeolithschicht vor der eigentlichen chemisch sensitiven Schicht an, sondern die Zeolithschicht selbst wirkt als chemisch sensitive Schicht.

Wesentlich für den Meßeffekt in Verbindung mit den Kondensatorstrukturen ist die innerhalb der Zeolithkristalle adsorbierte Menge an Gasmolekülen. Hierdurch kommt auch die formselektive Wirkung der Zeolithe voll zum Tragen, da nur Moleküle mit entsprechenden gaskinetischen Durchmessern in Zeolithe mit bestimmten Porendurchmessern diffundieren können. Der Durchmesser der Primärporen (innerkristalline Kanäle und Hohlräume) des verwendeten Zeolithen, sollte hierbei in vorteilhafter Weise dem gaskinetischen Durchmesser des zu detektierenden Moleküls vergleichbar sein. Die Menge des an der äußeren Zeolithoberfläche oder an der Kondensatorstruktur selbst adsorbierten Materials spielt nur eine untergeordnete Rolle.

In einer weiteren Bauausführung des Systems Zeolith/Kondensator kann auch die formselektive Eigenschaft der Zeolithe in Bezug auf katalytische Gasreaktionen ausgenutzt werden. Durch Einbau oxidationsaktiver Metalle in die Zeolithporen durch bekannte Methoden wie Ionenaustausch oder Adsorption von Metalldämpfen oder flüchtigen Metallverbindungen und anschließende thermische oder thermisch reduktive Behandlung, können nur Moleküle oxidiert werden, die in die Zeolithporen diffundieren. Auch dieser Effekt führt zu einer Veränderung der Kapazität des Kondensators.

Im Gegensatz zur Beschichtung der Kondensatorstrukturen mit gasundurchlässigen Schichten, wo systembedingt nur eine geringe Schichtdicke und damit auch nur eine geringe Empfindlichkeit möglich ist, kann durch die Ausführung der sensitiven Schicht mit Zeolithkristallen aufgrund der schnellen Diffusion der Gasmoleküle durch die Sekundärporen eine größere Schichtdicke und damit eine Erhöhung der Empfindlichkeit erzielt werden. Schichtdicken von bis zu 100 μm sind dabei ohne nennenswerten Verlust an Ansprechgeschwindigkeit realisierbar. Die Kristallgröße der Zeolith-Primärpartikel sollte hierbei zwischen 0,1 und 80 μm liegen.

Die relevanten Eigenschaften der als sensitive Schicht eingesetzten Zeolithe sind ihr definiertes Porenvolumen im Bereich der gaskinetischen Durchmesser der zu messenden Moleküle, ihre hohe innere Oberfläche und, für bestimmte Anwendungen, ihre hohe katalytische Aktivität und temperaturbeständigkeit. Prinzipiell können daher erfindungsgemäß alle entsprechenden Zeolithtypen, wie z.B. Faujasite, Mordenite, Pentasile usw. eingesetzt werden. In gleicher Weise können auch zeolithanaloge Verbindungen wie ALPO's und SAPO's eingesetzt werden.

Zur Erzielung eines katalytisch oxidativen Effektes werden die Zeolithe in vorteilhafter Weise mit Metallen der Platingruppe, wie Pt, Pd, Rh dotiert. Hierbei können die Metalle in elementarer, ionischer oder oxidischer Form im Zeolith vorliegen. Um spezielle Adsorptionseffekte auszunutzen, können die Zeolithe mit Metallen der Nebengruppe des Periodensystems, wie Kupfer, Nickel, Eisen, Kobalt, Vanadin, Chrom, Mangan oder Silber in elementarer, ionischer oder oxidischer Form dotiert sein.

In Verbindung mit der chemisch sensitiven Schicht können prinzipiell unterschiedliche kapazitive Meßfühler verwendet werden, die geeignet sind, die durch die Wechselwirkung der sensitiven Schicht mit der umgebenden Gasatmosphäre erzeugte Änderung der Dielektrizitätskonstanten durch eine ausreichend hohe Wirkung auf die Kapazität der Kondensatoranordnung anzuzeigen. In besonders vorteilhafter Weise können mikrostrukturierte Interdigitalkondensatoren eingesetzt werden, da hier eine hohe Grundkapazität des Kondensators auf kleinstem Raum realisiert werden kann.

Die Interdigitalkondensatoren können durch die üblichen Mikrostrukturierungsprozesse hergestellt werden. Beispielsweise durch Aufsputtern von NiCr/Au auf eine Quarzsubstrat und anschließende Strukturierung durch naßchemisches Ätzen. Die erzeugten Strukturen liegen zwischen 1 und 100 μm und sind bis zu 2 μm hoch. Diese Kondensator-Strukturen lassen sich dann einfach mit der sensitiven Schicht durch Sedimentieren, Sprühen, Schleudern oder die bekannten Prozesse der Dickschicht-Technik versehen. Hierbei wird die chemisch sensitive Schicht vorteilhaft in einer Dicke von 2 μm bis 500 μm aufgetragen.

Durch ein hohes Aspektverhältnis der Kondensator-Struktur in Verbindung mit der hochporösen chemisch sensitiven Schicht kann eine deutliche Erhöhung der Sensorempfindlichkeit erreicht werden. Die Struktur wird ab einer Strukturhöhe von 2 μm als dreidimensionale (3D-) Interdigitalkondensator-Struktur bezeichnet. Eine solche Struktur läßt sich in Verbindung mit der porösen, senitiven Schicht vorteilhaft einsetzen. Da das Meßgas durch Diffusion die gesamte sensitive Schicht durchdringen kann und nicht nur an deren äußerer Oberfläche adsorbiert oder chemisch umgesetzt wird. Die Erhöhung der Sensorempfindlichkeit basiert hierbei darauf, daß die den Meßeffekt hervorrufenden Vorgänge unmittelbar zwischen den Kondensatorstrukturen stattfinden.

Der 3D-Interdigitalkondensator kann vergleichbar dem planaren Interdigitalkondensator durch die an sich bekannten Mikrostrukturierungsprozesse hergestellt werden. Die Erhöhung der Struktur kann beispielsweise durch eine galvanische Verstärkung der planaren Leiterbahnen erfolgen, so daß die Leiterbahnen insgesamt auf eine Höhe von 2 bis 100 μm verstärkt werden. Die Breite der Leiterbahnen liegt hierbei zwischen 1 und 100 μm. Das Aufbringen der chemisch sensitiven Beschichtung erfolgt dann wie oben für den planaren Interdigitalkondensator beschrieben.

Durch die Möglichkeit der Modifizierung der chemisch sensitiven Schicht im Hinblick auf katalytische Aktivität und Selektivität einerseits und durch die Einführung spezieller Adsorptionszentren und Porendurchmesser andererseits können die so beschichteten kapazitiven Sensoren für eine Vielzahl von Gasen wie z.B. Kohlenwasserstoffe. Halogenkohlenwasserstoffen, CO, Stickoxide, Ammoniak und Wasser eingesetzt werden. Sie zeigen hierbei eine kurze Ansprechzeit, eine hohe Empfindlichkeit und eine gesteigerte Selektivität und/oder minimierte Querempfindlichkeit, wie aus den Ausführungsbeispielen und Fig. hervorgeht.

Die Erfindung wird nachfolgend anhand von Ausführungsbeispielen und Figuren näher erläutert. Es zeigen:

Fig. 1: Interdigitalkondensator mit einer Elektrodenbreite von 100 μm.

Fig. 2: Interdigitalkondensator mit Zeolithschicht im Querschnitt. Im Ausschnitt sind 2 Aluminiumleiterbahnen und die darüber befindliche sensitive Schicht aus Zeolithpulver, sowie der Siliziumsockel zu sehen.

Fig. 3: 3-dimensionale Interdigitalkondensatorstruktur (Teilansicht im Querschnitt).

Fig. 4: Ein Diagramm des Ansprechverhaltens und des Abklingverhaltens.

EP 0 426 989 B1

Ausführungsbeispiele mit Bezug auf die Figuren

1. Herstellung der Zeolithpulver (H-Y)

20 g Na-Y Zeolith wurden unter Rückfluß mit 0.8 l Ammoniumnitratlösung ausgetauscht. Die Behandlung wurde 3 mal 24 Stunden durchgeführt, wobei zwischendurch filtriert und der Filterkuchen mit heißem Wasser gewaschen wurde. Anschließend wurde das Zeolithpulver getrocknet und einer Temperaturbehandlung unterzogen.

2. Herstellung der Zeolithpulver (Pt-Y)

Ausgehend von H-Y Zeolith wurde der Pt-Y Zeolith durch Ionenaustausch mit $(Pt(NH_3)_4)Cl_2$ in wässriger Lösung hergestellt. Es wurde 24 h mit wenig Wasser bei Raumtemperatur gerührt. Nach dem Abfiltrieren und Waschen wurde der Filterkuchen getrocknet und einer anschließenden Temperaturbehandlung unterzogen. Zur Erzeugung elementaren Platins wurde der Zeolith im Wasserstoffstrom reduziert.

3. Herstellung des Gassensors

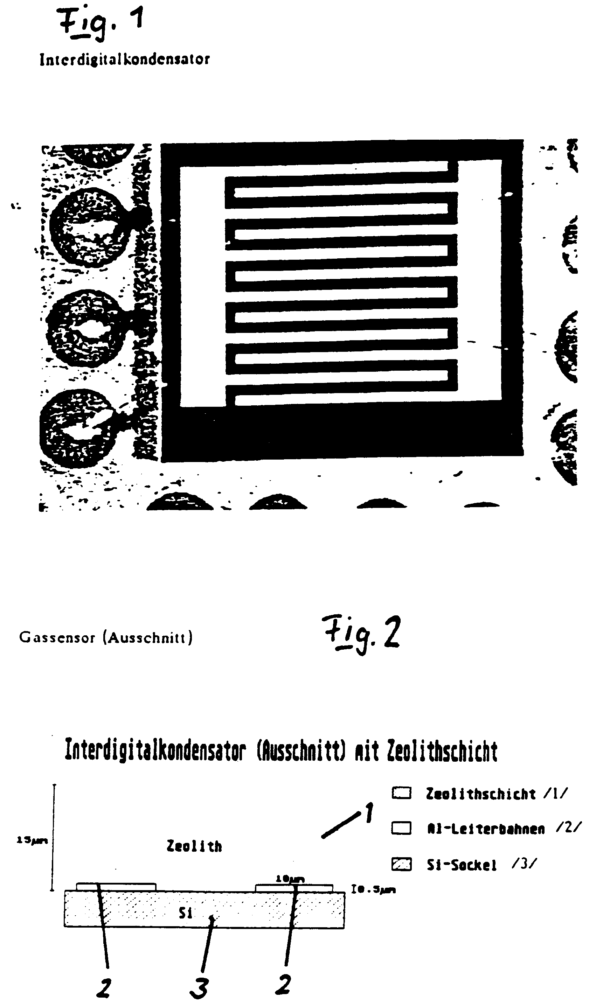

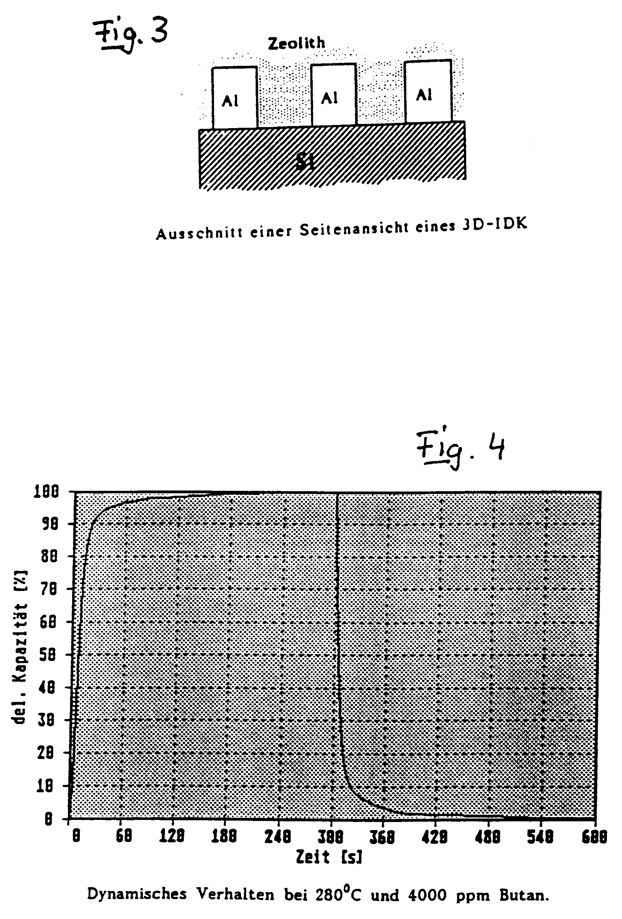

Zur Herstellung des Gassensors wird (Fig. 1 und 2) ein Interdigitalkondensator (IDK, Fig. 1) mit Al-Leiterbahnen (Fig. 2 /2/) auf $Si/SiO_2$ (Fig. 2 /3/) verwendet. Die Strukturbreite beträgt 15 µm. Der IDK wird auf einem TO8-Sockel mit einem temperaturfesten Kleber fixiert und gebondet. Die Zeolithschicht (Fig. 2 /1/) wird durch Versprühen einer wässrigen Suspension unter gleichzeitigem Verdampfen des Wassers aufgebracht. Durch Einstellen der Sprühdauer wird eine Schichtdicke von 15 µm erreicht.

4. Labortest mit Butan bei 50 °C

Die Sensoren wurden in einer Meßkammer im Hinblick auf die Signalerzeugung untersucht, wobei die Meßkammer mit 2 l/min synthetischer Luft und einer definierten Menge der zu messenden Komponente durchströmt wurde. Bei einer Sensortemperatur von 50 °C wurden für die Komponente Butan folgende Ergebnisse erzielt:

| Zeolith | Porenweite | $\Delta C$ bei 1,2 Vol.-% Butan |
|---|---|---|
| H-Zeolith | 0.74 nm | 2.48 pF |
| H-Zeolith | 0.55 nm | 0.25 pF |
| H-Zeolith | 0.39 nm | 0.18 pF |

5. Labortest zur Untersuchung der Selektivität/Querempfindlichkeit bei 50 °C

Beispiel 4 entsprechende Tests mit dem Gasen Ethan oder Kohlenmonoxid führten zu keiner Signalerzeugung der Sensoren.

6. Labortest mit Butan bei 200 °C

Beispiel 4 entsprechende Tests bei 200 °C und einem Pt-dotierten Zeolith als sensitive Schicht ergaben folgende Ergebnisse:

4

| Frequenz (Hz) | ΔC (pF) bei 1 Vol.-% Butan |
|---|---|
| 500 | 8,0 |
| 600 | 9,0 |
| 800 | 9,0 |
| 1000 | 8,9 |
| 1200 | 8,6 |
| 1500 | 8,5 |
| 2000 | 8,0 |
| 2500 | 7,6 |
| 3000 | 7,3 |
| 4000 | 6,5 |
| 5000 | 5,9 |
| 6000 | 5,4 |
| 8000 | 4,5 |

7. Labortest mit Dichlormethan bei 60 °C

Beispiel 4 entsprechende Tests mit Dichlormethan ergaben folgende Ergebnisse:

| Zeolith | Porenweite | ΔC bei 1 Vol.-% Dichlormethan |
|---|---|---|
| H-Zeolith | 0.74 nm | 0.18 pF |
| H-Zeolith | 0.55 nm | 0.64 pF |
| H-Zeolith | 0.39 nm | 0.61 pF |

8. Ansprechverhalten der Sensoren

Um das Ansprech- und Abklingverhalten der Gassensoren zu messen, wurde dem Trägergas sprungartig für eine bestimmte Zeit 1 % Butan beigemischt und ebenfalls sprungartig wieder abgestellt. Wie Fig. 3 zeigt, reagiert der Sensor sehr schnell. Innerhalb von 15 bis 20 Sekunden sind 90 % des Endwertes erreicht und nach einer kurzen Einschwingphase bleibt das Signal stabil. Auch nach dem Abstellen des Butans benötigt der Sensor nur 50 bis 100 Sekunden um auf den Null-Wert zurückzukehren.

**Patentansprüche**

1. Sensor zur selektiven Bestimmung von Gasen, bestehend aus einem als Kondensator wirkenden Bauelement und einer im Dielektrikum befindlichen gasdurchlässigen, sensitiven Schicht, gekennzeichnet dadurch, daß die sensitive Schicht eine geordnete, kristalline Struktur aus Primärporen aufweist, deren Durchmesser in der Größenordnung des gaskinetischen Durchmessers der zu detektierenden Gasmoleküle liegt.

2. Sensor nach Anspruch 1, gekennzeichnet dadurch, daß die sensitive Schicht zwischen 2 μm und 500 μm stark ist.

3. Sensor nach Anspruch 1 und 2, gekennzeichnet dadurch, daß die sensitive Schicht aus kristallinem Pulver mit einer Kristallgröße von 0,1 μm und 80 μm besteht.

4. Sensor nach Anspruch 1 bis 3, gekennzeichnet dadurch, daß das als sensitive Schicht wirkende Pulver eine innere Oberfläche von 100 bis 1500 m²/g besitzt.

5. Sensor nach Ansprüchen 1 bis 4, gekennzeichnet dadurch, daß das als sensitive Schicht wirkende Pulver Primärporen zwischen 0,1 und 1,5 nm hat.

6. Sensor nach Ansprüchen 1 bis 5, gekennzeichnet dadurch, daß das als sensitive Schicht wirkende Pulver ein Zeolith ist.

7. Sensor nach Ansprüchen 1 bis 6, gekennzeichnet dadurch, daß der Zeolith zur Erhöhung der Selektivität mit Metallen aus den Nebengruppen des Periodensystems mit einem Gewichtsanteil von 0,1 bis 10 % dotiert ist.

8. Sensor nach Ansprüchen 1 bis 7, gekennzeichnet dadurch, daß die im Zeolith befindlichen Dotierungselemente in metallisch-elementarer Form, in ionischer Form, als Oxide oder als Cluster vorliegen können.

9. Sensor nach Anspruch 1 bis 8, gekennzeichnet dadurch, daß die sensitive Schicht zu 50 bis 100 % aus Zeolith besteht.

10. Sensor nach Anspruch 1, gekennzeichnet dadurch, daß es sich bei dem als Kondensator wirkenden Bauelement um einen Interdigitalkondensator handelt.

11. Sensor nach Anspruch 1 und 10, gekennzeichnet dadurch, daß die Strukturbreite des Interdigitalkonden-sators zwischen 1 μm und 100 μm liegt und die Strukturhöhe bis zu 2 μm beträgt.

12. Sensor nach Anspruch 1, 10 und 11, gekennzeichnet dadurch, daß der Interdigitalkondensator als dreidimensionaler Interdigitalkondensator ausgeführt ist.

13. Sensor nach Anspruch 12, gekennzeichnet dadurch, daß die Höhe der Leiterbahnen des Kondensators zwischen 2 μm und 100 μm liegt.

14. Sensor nach Ansprüchen 12 und 13, gekennzeichnet dadurch, daß die Leiterbahnen des Kondensators eine Breite von 1 μm bis 100 μm haben.

15. Sensor nach Anspruch 1, gekennzeichnet dadurch, daß das als Kondensator wirkende Bauelement aus zwei oder mehreren Platten in planarer oder konzentrischer Anordnung besteht.

16. Sensor nach Ansprüchen 1 bis 15, gekennzeichnet dadurch, daß der Sensor mit einem Element zur Heizung des Sensors und einem Element zur Messung der Sensortemperatur bestückt ist.

17. Sensor nach Ansprüchen 1 bis 16, gekennzeichnet dadurch, daß die Betriebstemperatur des Sensors zwischen 10 und 500 °C liegt.

18. Verwendung des Sensors nach Ansprüchen 1 bis 16 zur Messung von Kohlenwasserstoffen.

19. Verwendung des Sensors nach Ansprüchen 1 bis 16 zur Messung von Halogenkohlenwasserstoffen.

20. Verwendung des Sensors nach Ansprüchen 1 bis 16 zur Messung anorganische Gase mit kleinem Moleküldurchmesser, wie Ammoniak, Stickstoffmonoxid, Stickstoffdioxid, Kohlenmonoxid und Wasser.


## Claims

1. Sensor for selectively determining gases, consisting of a structural component, which acts as a capacitor, and a gas permeable, sensitive layer disposed in the dielectric, characterised in that the sensitive layer comprises an ordered, crystalline structure of primary pores of which the diameter is in the order of magnitude of the gas-kinetic diameter of the gas molecules to be detected.

2. Sensor according to Claim 1, characterised in that the sensitive layer is between 2 μm and 500 μm thick.

3. Sensor according to either of Claims 1 and 2, characterised in that the sensitive layer consists of crystalline powder with a crystal size between 0.1 μm and 80 μm.

4. Sensor according to any one of Claims 1 to 3, characterised in that the powder acting as the sensitive layer has an internal surface area of from 100 to 1500 $m^2$/g.

5. Sensor according to any one of Claims 1 to 4, characterised in that the powder acting as the sensitive layer has primary pores of between 0.1 and 1.5 nm.

6. Sensor according to any one of Claims 1 to 5, characterised in that the powder acting as the sensitive layer is a zeolite.

7. Sensor according to any one of Claims 1 to 6, characterised in that the zeolite is doped with metals from the subgroups of the periodic system in proportions of from 0.1 to 10 weight %, in order to increase the selectivity.

8. Sensor according to any one of Claims 1 to 7, characterised in that the doping elements in the zeolite can be present in the metallic-elementary form, in the ionic form, as oxides or as clusters.

9. Sensor according to any one of Claims 1 to 8, characterised in that up to 50 to 100% of the sensitive layer consists of zeolite.

10. Sensor according to Claim 1, characterised in that the structural component acting as the capacitor is an interdigital capacitor.

11. Sensor according to either of Claims 1 and 10, characterised in that the structural width of the interdigital capacitor is between 1 μm and 100 μm and the structural height is up to 2 μm.

12. Sensor according to Claims 1, 10 and 11, characterised in that the interdigital capacitor is in the form of a three-dimensional interdigital capacitor.

13. Sensor according to Claim 12, characterised in that the height of the strip conductors of the capacitor is between 2 μm and 100 μm.

14. Sensor according to either of Claims 12 and 13, characterised in that the conductor strips of the capacitor are between 1 μm and 100 μm wide.

15. Sensor according to Claim 1, characterised in that the structural component acting as the capacitor consists of two or more plates arranged in a planar or concentric manner.

16. Sensor according to any one of Claims 1 to 15, characterised in that the sensor is provided with an element for heating the sensor and an element for measuring the sensor temperature.

17. Sensor according to any one of Claims 1 to 16, characterised in that the operating temperature of the sensor is between 10 and 500°C.

18. Use of the sensor according to any one of Claims 1 to 16 for measuring hydrocarbons.

19. Use of the sensor according to any one of Claims 1 to 16 for measuring hydrogen halides.

20. Use of the sensor according to any one of Claims 1 to 16 for measuring inorganic gases with small molecular diameters, such as ammonia, nitrogen monoxide, nitrogen dioxide, carbon monoxide and water.

**Revendications**

1. Capteur pour l'analyse sélective de gaz, constitué d'un élément formant condensateur et d'une couche sensible perméable au gaz qui est disposée dans le diélectrique, **caractérisé** en ce que la couche sensible présente une structure cristalline ordonnée de pores primaires, dont le diamètre est de l'ordre de grandeur du diamètre cinétique des molécules du gaz à détecter.

2. Capteur selon la revendication 1, **caractérisé** en ce que l'épaisseur de la couche sensible est comprise entre 2 μm et 500 μm.

3. Capteur selon les revendications 1 et 2, **caractérisé** en ce que la couche sensible est constituée de poudre cristalline avec une taille de cristaux comprise entre 0,1 μm et 80 μm.

4. Capteur selon l'une des revendications 1 à 3, **caractérisé** en ce que la poudre servant de couche sensible possède une superficie interne de 100 à 1500 m²/g.

5. Capteur selon l'une des revendications 1 à 4, **caractérisé** en ce que la poudre servant de couche sensible possède des pores primaires de taille comprise entre 0,1 et 1,5 nm.

6. Capteur selon l'une des revendications 1 à 5, **caractérisé** en ce que la poudre servant de couche sensible est une zéolithe.

7. Capteur selon l'une des revendications 1 à 6, **caractérisé** en ce qu'afin d'augmenter la sélectivité, la zéolithe est dopée de métaux des groupes secondaires de la classification périodique, en un pourcentage de poids de 0,1 à 10 %.

8. Capteur selon l'une des revendications 1 à 7, **caractérisé** en ce que les éléments dopants qui se trouvent dans la zéolithe peuvent être présents sous la forme métallique élémentaire, sous la forme ionique, sous forme d'oxydes ou sous forme d'agglomérats de molécules ("cluster").

9. Capteur selon l'une des revendications 1 à 8, **caractérisé** en ce que la couche sensible est constituée à 50 à 100 % de zéolithe.

10. Capteur selon la revendication 1, **caractérisé** en ce que l'élément formant de condensateur est un condensateur interdigité.

11. Capteur selon les revendications 1 et 10, **caractérisé** en ce que la largeur de la structure du condensateur interdigité est comprise entre 1 μm et 100 μm, et la hauteur de la structure peut atteindre 2 μm.

12. Capteur selon les revendications 1, 10 et 11, **caractérisé** en ce que le condensateur interdigité est réalisé sous forme de condensateur interdigité en trois dimensions.

13. Capteur selon la revendication 12, **caractérisé** en ce que la hauteur des pistes conductrices du condensateur est comprise entre 2 μm et 100 μm.

14. Capteur selon les revendications 12 et 13, **caractérisé** en ce que les pistes conductrices du condensateur ont une largeur comprise entre 1 μm et 100 μm.

15. Capteur selon la revendication 1, **caractérisé** en ce que l'élément formant condensateur est constitué de deux ou plusieurs plaques en disposition plane ou concentrique.

16. Capteur selon l'une des revendications 1 à 15, **caractérisé** en ce que le capteur est équipé d'un élément pour chauffer le capteur et d'un élément pour mesurer la température du capteur.

17. Capteur selon l'une des revendications 1 à 16, **caractérisé** en ce que la température de service du capteur est comprise entre 10 et 500 °C.

18. Utilisation du capteur selon l'une des revendications 1 à 16 pour la mesure d'hydrocarbures.

19. Utilisation du capteur selon l'une des revendications 1 à 16 pour la mesure d'hydrocarbures halogénés.

20. Utilisation du capteur selon l'une des revendications 1 à 16 pour la mesure de gaz inorganiques à petit diamètre de molécules, tels que l'ammoniac, le monoxyde d'azote, le dioxyde d'azote, le monoxyde de carbone et l'eau.

*Fig. 1*

Interdigitalkondensator

Gassensor (Ausschnitt)

*Fig. 2*

## Interdigitalkondensator (Ausschnitt) mit Zeolithschicht

| | Zeolithschicht /1/ |
| --- | --- |
| | Al-Leiterbahnen /2/ |
| | Si-Sockel /3/ |

## Fig. 3

Zeolith

Al  Al  Al

Si

Ausschnitt einer Seitenansicht eines 3D-IDK

## Fig. 4

Dynamisches Verhalten bei 280°C und 4000 ppm Butan.